# EUROPEAN PATENT SPECIFICATION

(11) **EP 0 773 721 B1**
(45) Date of publication and mention of the grant of the patent: **30.12.1998**
(21) Application number: 95926540.6
(22) Date of filing: 04.08.1995
(51) Int. Cl.: A21D 13/00, B65D 65/46

(54) **BIODEGRADABLE CONTAINER FOR LIQUID OR SEMI-SOLID FOOD OR NON FOOD PRODUCTS**
BIOABBAUBARES BEHÄLTER FÜR FLÜSSIGE ODER HALBFLÜSSIGE NAHRUNGSMITTEL ODER ANDERE PRODUKTE
RECIPIENT BIODEGRADABLE POUR ALIMENTS LIQUIDES OU SEMI-SOLIDES OU POUR PRODUITS NON ALIMENTAIRES

(30) Priority: 05.08.1994 NL 9401283
(43) Date of publication of application: 21.05.1997
(73) Proprietor: Coöperatieve Verkoop- en Productievereniging van Aardappelmeel en Derivaten 'AVEBE' B.A., NL-9641 JA Veendam (NL)
(72) Inventor: ARENTSEN, Johan, Hendrik, Adolf, NL-7241 AD Lochem (NL); VAN DER PUTTEN, Jozef, Cornelius, Franciscus, M., NL-5215 XM 's-Hertogenbosch (NL)
(74) Representative: Smulders, Theodorus A.H.J., Ir.
(86) International application number: NL9500269
(87) International publication number: WO9603886

(56) References cited:
- EP-A- 0 471 306
- EP-A- 0 498 190
- EP-A- 0 608 031
- WO-A-93/05668
- DE-A- 4 121 901
- FR-A- 2 605 335
- US-A- 5 130 151
- US-A- 5 389 322

## Description

This invention relates to a biodegradable moulding suitable for containing or holding liquid or more or less solid food or non-food products without loss of the firmness of the moulding. The invention further relates to a method for manufacturing such biodegradable moulding.

WO 91/12186 discloses the manufacture of biodegradable thin-walled mouldings by baking an aqueous mixture containing a starch product and a release agent as essential components in a mould and adjusting the baked moulding to a moisture content of 6-22% by weight by conditioning, in order to obtain the desired tough and firm texture. As a release agent, preferably a medium-chain or long-chain fatty acid or a derivative thereof, such as a fatty amide, is used. The aqueous starting mixture can contain numerous other additives, such as thickeners, fillers, hygroscopic substances, colour, etc. For strengthening the structure a zirconium salt solution can be used. These known mouldings are unsuited for containing ready-to-eat hot food, such as so-called fast food, because they do not possess the firmness that is necessary for them to be able to hold or contain such food for the average period of time that is necessary to consume the food, viz. at least 10 minutes.

Further, NL-A-9100590 discloses a method for manufacturing an environment-friendly package, wherein a dough is formed from potato flour, a minor amount of cereal flour, edible oil, conventional additives, including stabilizers and emulsifiers, and water. By adding a salt, the structure of the dough can be improved. The dough is then forced into a mould and baked in it. After slow cooling, the moulding is removed from the mould. It is claimed that the packages thus manufactured possess moisture-repellent properties and good resistance to liquids. This supposedly renders them suitable for packaging even hot foods. In practice, however, this proves not to be the case. The fact is that upon contact with hot foods these packages rapidly lose their firmness. They weaken and are then no longer able to retain the hot food contained therein.

EP-A-0 608 031 discloses a well controllable method for manufacturing biodegradable or compostable mouldings which exhibit good resistance to the action of moisture and water and moreover possess a high mechanical strength. The mouldings are baked in a mould from an easy-to-handle dough based on a starch product, xanthan gum, a reactive siloxane, an inert filler and water. When hot or very hot so-called fast food or hot beverage is provided in such a moulding, the moulding is often found to lose its firmness sooner than is desired. This, of course, entails a limitation of the range of applications.

The above-discussed known mouldings and packages are also less suitable for storing liquid or more or less solid food and non-food products of a widely varying nature under normal ambient conditions for a prolonged time.

An object of the invention is to provide self-supporting mouldings which maintain their firmness sufficiently long for applications where all kinds of liquid or more or less solid food or non-food products are stored for a short or long time in or on those mouldings.

More especially, the object of the invention is to provide self-supporting mouldings which maintain their firmness sufficiently long when liquid or more or less solid ready-to-eat hot food, including hot beverage, is held therein.

Another object of the invention is to provide such mouldings which are also biodegradable, leaving only useful degradation products and harmless residual substances.

A further object of the invention is to provide a simple method for manufacturing a biodegradable moulding which is well capable of carrying or containing cold or hot beverages or dishes for quite some time without losing its firmness.

It has now been found that the above-mentioned ostensibly contradictory requirements can be met by a biodegradable moulding suitable for containing liquid or more or less solid food or non-food products without loss of the firmness of the moulding, which moulding is composed of a self-supporting base moulding, obtained by baking a suspension based on a starch product, and a water-resistant film, applied to the base moulding, of a biodegradable wax composition containing at least 50% by weight of wax components and having a melting range beginning at a temperature of at least 40°C, with the film adhering firmly to the base moulding. When the moulding is intended for containing ready-to-eat hot food, that melting range is even preferred to start at a temperature of at least 80°C.

The invention also relates to a method for manufacturing a biodegradable moulding suitable for containing liquid or more or less solid food or non-food products without loss of the firmness of the moulding, whereby 500-1500 parts by weight of a starch product containing 5-75% by weight of a starch derivative which in comparison with native starch has a reduced swelling capacity at an increased temperature, 0.5-50 parts by weight of a thickener, 25-300 parts by weight of an inert filler, and an adhesion-promoting substance are prepared with water and mixed to obtain a homogeneous suspension, this suspension is introduced into a baking mould and is baked to obtain a self-supporting base moulding, and at least to the surface of the self-supporting base moulding that is intended for containing the food or non-food products, a firmly adherent water-resistant film is applied of a biodegradable wax composition containing at least 50% by weight of wax components and having a melting range beginning at a temperature of at least 40°C, and preferably at a temperature of at least 80°C in case the moulding is intended for containing ready-to-eat hot food.

DE-A-4,121,901 discloses the use of a vegetable wax such as carnauba wax or candelilla wax in a coating mass which additionally contains ethyl cellulose and edible oil. The preparation of the coating mass is complex. The coating mass, itself suitable for human consumption, is applied to articles from baked dough in order to render them better resistant to, for instance, hot drinks.

US-A-5,130,151 also discloses a composition which itself is edible and contains all kinds of edible oleaginous components, including an edible wax. This last accounts for at most 10% by weight of the composition. The composition preferably has a melting point in the range of 32-66°C and is suitable for forming a moisture-proof barrier on foods, such as biscuits, dough products, fruit and vegetables.

The wax film which is applied to the self-supporting base moulding is an essential part of the invention. In fact, that wax film constitutes a continuous water-resistant solid film or coating which adheres well to the base moulding and which prevents the liquid or more or less solid food or non-food products from acting directly on the base moulding, whereby the moulding would lose its firmness too soon or, to put it differently, would turn weak or soft prematurely and thus would no longer be able to fulfill its function. Examples of non-food products which can be contained in the present mouldings are motor oil, cosmetics such a night cream and other personal care creams, materials for use in electronics, plants, etc. No specific examples of food products need to be mentioned because practically all food products are eligible to be held in or on the present mouldings.

According to a preferred embodiment, the present moulding is intended for containing liquid or more or less solid ready-to-eat hot food, including hot beverage. Examples include soups, sauces, chips, meat or fish dishes, for instance kebab, croquettes, hot sausage, fish fingers, etc. Many of these dishes belong to the category of fast food or snacks. The wax film must then protect the moulding during the time needed to consume the hot food. As a rule of thumb it may be assumed that a period of protection of at least 10 minutes against food having an initial temperature of 70°C or whose temperature has fallen to 70°C shortly after the food has been placed on the moulding is adequate for practical use.

Although the wax film as such can be qualified as non-edible or as unfit for human consumption, there is no objection to the consumption of cold or hot drinks or dishes in direct contact with the wax film. On account of the inedible wax film, the moulding coated therewith can also be qualified as inedible.

Of course, the wax film should remain firmly attached to the base moulding all the time the food or non-food products are contained in the moulding. Like the base moulding itself, the wax film is biodegradable, which is meant to say that upon biodegradation eventually only useful or harmless residues are left.

The wax composition for forming the wax film generally contains a number of components, including at least two kinds of wax of a different type, in order to meet the various above-described requirements. In any case the wax composition contains at least 50% by weight of wax components, i.e. waxes or wax-type substances. A wax composition which has been found to be particularly suitable when it is intended for ready-to-eat hot food to be held in or on the moulding in accordance with the above-described preferred application of the present mouldings, is a wax composition which contains the following components in the specified amounts:
- 40-70 and preferably 50-65 parts by weight of an amorphous, water-repellent type of wax whose melting range is in the range below 90°C,
- 15-35 and preferably 20-30 parts by weight of a crystalline type of wax whose melting range is in the range above 95°C, and
- 5-25 and preferably 10-20 parts by weight of a resin.

The first component of the above-mentioned wax composition is an amorphous, water-repellent type of wax having a relatively low melting range. Preferably, the highest melting range is in the range of 82-88°C. This wax component can to a considerable extent consist of esters of higher fatty acids having 28-34 carbon atoms. Often, in addition to the ester functions, alcohol groups are present. Preferably, this wax component has a saponification number between 20 and 60. Suitable kinds of wax of this type are to be found among the natural kinds of wax, in particular waxes of the Carnauba type. This wax component contributes to a considerable extent to the water-resistance, the strength and the flexibility of the wax film to be formed.

The second wax component is a crystalline kind of wax whose melting range is in a temperature range which is considerably higher than the temperature range in which lies the melting range of the first wax component. The second wax component is less plastic than the first, but due to its higher melting range contributes especially to the wax film remaining resistant to the high temperature of the hot food provided in the moulding. Preferably, the melting range of the second wax component is in the range of 100-120°C. As an example of a suitable wax, the commercially available K21 wax of the firm of Paramelt Syntac in Heerhugowaard, the Netherlands, can be mentioned.

The third component of the wax composition is a resin, which serves mainly to effect intimate bonding of the wax film to the base moulding. Preferably, an optionally modified and/or stabilized natural resin is used having a saponification number of at least 150, for instance between 170 and 250, and whose melting range is in the range above 75°C, preferably in the range of 78-85°C. As an example of such a resin a gum resin with abietic acid groups can be mentioned, which may be modified and/or stabilized to reduce oxidation sensitivity.

When the wax composition contains several essential components, for instance three components as described above, those components are chosen in such a manner and mixed with each other in such proportions that the eventual wax composition or wax blend possesses the desired properties. One of these properties relates to the melting range which according to ASTM D 3954 (drop formation off hot rod) begins at a temperature of at least 40°C and according to the preferred embodiment described at at least 80°C and preferably even at at least 100°C, enabling the mouldings to be used to heat food by means of microwaves. Due care should be taken, however, that the achievement of so high a melting range does not detract from the plasticity, whereby cracks would easily arise in the wax film, which may have the undesired effect of the moulding losing its firmness prematurely.

In addition to the above-discussed thermal stability, which is determined to an important extent by the lower temperature limit of the melting range, it is also of importance that the wax film is water-resistant. This water-resistance is determined on the one hand by the nature of the components and on the other by the continuous structure of the wax film, since any cracks in the wax film would enable water from the food to penetrate the base moulding and the firmness of the moulding might thus be undone prematurely.

Further, the saponification number of the wax composition is of significance. The saponification number is an indication of the ester bonds present. In fact, a minimum value of the saponification number has been found to be of significance for strengthening the bond of the wax film to the base moulding, especially when the base moulding also includes waxy components, as will be discussed hereinafter. According to the invention, it is desired that the saponification number of the total wax composition is at least 30, determined according to the method described in DGF-M-IV-2 (DIN standard). Preferably, the saponification number is between 30 and 250. When the three components described above are used, it is the amorphous wax and especially the resin that contribute to the saponification number.

The biodegradability or biological decomposability of the moulding, including the wax film, can be determined by the method described in OECD Guideline 301 B. This method, also referred to as the modified Sturm test, is a standard method for determining the biological decomposability of organic materials, whereby the amount of CO₂ which is released upon bacterial decomposition of the material is measured and compared with the amount of CO₂ that can be released theoretically. When the moulding satisfies the biodegradability requirements set in this method, it can be considered biodegradable and the term "biodegradable" is used in this sense here. The use of natural products or products derived therefrom for forming the wax film generally makes it easier to meet the requirement of biodegradability.

Finally, it is preferred that the wax film is not unduly soft, i.e. is not what is called "wax soft" but a little hard in order to avoid the wax film being damaged too easily upon contact with, for instance, a plastic fork or knife, since such damage could cause the loss of the continuous structure of the wax film, which could lead to premature loss of the firmness of the moulding, as discussed above.

The wax composition can be formed by mixing the essential components to be included therein, for instance the three types of components as described before, and any further desired components, such as stabilizers, antioxidants and/or colour, in the proportions chosen. Such mixing is normally carried out under heating, so that a liquid phase is produced and a homogeneous mixture can be easily obtained. The molten wax composition can be applied as a mist to one or both sides of the base moulding by means of an atomizer, preferably with addition of hot air. Preferably, this is done immediately after the base moulding has been formed and while it is still hot. The reason is that this makes it possible to work with a single compact production unit and moreover the still hot base moulding promotes the uniform spread of the mist applied, forming a continuous wax film, while the high temperature also contributes to the wax film adhering firmly to the base moulding.

It goes without saying that other techniques known to those skilled in the art can be used to form the wax film, provided the wax film is a continuous film that firmly adheres to the base moulding. As an example of a different technique, powder coating followed by melting can be mentioned. Generally, the wax film is applied in a thickness of 2-20 µm, preferably in a thickness of 5-10 µm. Depending on the intended use of the biodegradable moulding, a wax film is applied to one or to both sides of the base moulding, and if only one side is covered, this is of course the side intended to accommodate the cold or hot food or non-food filling.

The self-supporting base moulding of the present biodegradable moulding is obtained by baking a suspension based on a starch product, usually in a mould which gives it the desired shape. In accordance with the invention, as a starch product, native starch, for instance potato starch, maize starch, wheat starch, waxy maize starch, tapioca starch, pea starch, high-amylose starch or rice starch can be used. Preferably, however, potato starch is used, of which the amylopectin content can vary between 75% and 100%. It is also possible to use starch derivatives, for instance starch which has been modified by etherification, esterification, acid hydrolysis, oxidation and/or cross-linking. When choosing a starch derivative, the preference is for products which leave only harmless residues upon biodegradation or composting.

According to a preferred embodiment of the invention, the starch product of the base moulding comprises 5-75% by weight of a starch derivative which, in comparison with native starch, has a reduced swelling capacity at an increased temperature. There are various known techniques for treating starch in order to reduce its swelling capacity. One of these techniques consists in cross-linking native starch or a starch derivative such as an ester or ether. Cross-linking takes place by treating the starch product in question with multifunctional cross-linking agents, so that covalent chemical bonds are formed between the starch molecules. The degree of cross-linking can be different and there is naturally a relationship between the degree of cross-linking and the extent to which the swelling capacity has been reduced. The manufacture and properties of cross-linked starch products is described by M. Rutenberg and D. Solarek in "Starch Derivatives: Production and Uses" in the book of R.L. Whistler, J.N. Bemiller and E.F. Paschall (Editors): "Starch: Chemistry and Technology", Chapter X, pp. 324-332, 1984. An example of a suitable cross-linked starch product is potato starch which has been cross-linked using sodium trimetaphosphate. Such products are commercially available under the name of Perfectamyl P10X (Avebe, Foxhol, the Netherlands).

The starch derivative of reduced swelling capacity and the amount thereof to be used are preferably chosen in such a manner that the freshly baked base moulding will swell or expand at least 20% and preferably at least 40% less than when no such starch derivative is present in the base moulding. Insofar as any swelling or expansion of the moulded product occurs, it happens more slowly. The use of a starch derivative of reduced swelling capacity in the base moulding thus reduces the chances that the wax film applied to the base moulding will detach or exhibit cracks as a result of its being insufficiently capable of following the expansion of the base moulding shortly after it has been formed.

It has been found that it is often useful to include in the suspension for forming the base moulding an additional substance for promoting the adherence of the wax film. With good results, as an additional substance, a substance can be used which consists substantially of waxy components, in particular a wax composition as described before for forming the surface film, viz. in an amount of less than 10% by weight of that suspension. On account of the high temperature at which the base moulding is baked, a part of those waxy components will be driven out, but a part will remain (less than 10% by weight of the base moulding), which is located substantially near the surface, where it contributes to the effectuation of a firm adherence of the wax film.

Preferably, the base moulding further contains a thickener, which serves especially to obtain a homogeneous, stable and easily transportable suspension of the starch product. Useful thickeners are mentioned in the literature discussed earlier, but a particular preference is expressed for the use of xanthan gum, the important advantages of which are extensively discussed in EP-A-0 608 031.

Another additive preferably used is an inert filler which contributes especially to the mechanical strength of the moulding. The inert filler can be any granular or powdery inorganic material, such as sand, chalk, clay, talc, and the like, but organic material can also be used, such as potato fibres, carbon fibres or wood fibres. The particle size of the inert filler is partly dependent on the eventual use of the moulding.

For manufacturing the base moulding, 500-1500 parts by weight of a starch product comprising 5-75% by weight of a starch derivative which, in comparison with native starch, has a reduced swelling capacity at an increased temperature; 0.5-50 parts by weight of a thickener, in particular xanthan gum; 25-300 parts by weight of an inert filler; and an adherence-promoting substance, in particular a wax composition, can be prepared with water and mixed to obtain a homogeneous suspension. The order in which these components are mixed with each other is not important. According to need, further biodegradable or harmless additives can be included in the suspension, such as emulsifiers, antioxidants, salts to render the suspension less sensitive to the hardness of the water used, colouring agents, etc. Mixing can be carried out in any suitable mixer, for instance in a Hobart mixer. The amount of water used is dependent on the desired consistency of the suspension. In correlation with the above-mentioned amounts of the other components, usually 500-1500 and preferably 800-1200 parts by weight of water are used. Typically, a suspension is prepared whose apparent viscosity, determined according to Brookfield LVF, is between 500 and 3,000 mPa.s.

The necessary amount of the prepared suspension is then introduced into a baking mould, normally a so-called pressing baking mould consisting of a lower and an upper section jointly defining the shape, the size and the wall thickness of the moulding to be manufactured. A large number of, for instance, metal moulds may be mounted on a belt conveyor and the assembly of baking moulds, heating elements, atomizer for applying the wax film and any further auxiliary, control and safety equipment may be part of an automatic baking machine. The baking temperature is typically chosen between 160 and 220°C and the baking time is then typically between 50 and 140 seconds. The baking conditions are naturally partly determined by the thickness of the base moulding, which is typically between 1 and 5 mm, depending on the intended use. The baked base moulding is removed from the baking mould. In the case where a wax film is applied to one side only, it is initially sufficient to remove only one mould section. The base moulding is preferably coated with the wax film on one or both sides. Preferably immediately thereafter, i.e. when the base moulding is still in hot condition, the base moulding is coated with the wax film on one or both sides, for instance by atomizing the wax composition onto the surface, all this as described hereinabove. Owing to the temperature conditions under which the wax film is applied, a strong anchoring is effected. Owing to a starch derivative of reduced swelling capacity being present in the base moulding, the latter expands to a lesser extent and less fast, so that the chances of any formation of crevices or cracks in the wax film are minimal.

The mouldings are there ready for storage, packaging, dispatch and use. Depending on the specific use, the mouldings can be manufactured in any desired shape, as in the form of mugs or of trays, plates or dishes with one or more recesses in any desired size and shape, etc. As discussed, the mouldings are intended in particular to receive hot food or beverage, in particular hot beverage, soup and so-called fast food or snacks. The mouldings have been found to be eminently capable of containing such hot food during their normal consumption time without essential loss of the firmness of the mouldings. "Essential loss" is understood to mean that the mouldings become too weak or soft to be able to properly contain their contents. Other applications are applications where liquid or more or less solid food or non-food products are to be stored at ambient temperature for a longer and even much longer time. Then a wax film whose melting range begins at a temperature of only 40°C can already ensure the firmness of the moulding. It goes without saying that the use of the mouldings for keeping food products requires that the wax composition used be odourless and tasteless.

After use the mouldings can be collected and composted or broken down biologically, eventually leaving only useful and harmless residual substances, such as fertilizers, inert fillers, etc.

The invention is further elucidated in and by the following Example.

### Example

In a Hobart mixer, with stirring (position 2), the following components were added to 1150 g mains water: 800 g potato starch, 200 g modified cross-linked potato starch (Perfectamyl P10X 18% from Avebe), 2 g Kelzan S (xanthan gum of the firm Danby Chemie, Amsterdam, the Netherlands), 2 g hydroxylapatite (pentacalcium hydroxyorthophosphate of the firm Fenninga, Oudewater, the Netherlands), 75 g China clay Spes (ECC International S.A., Visé/Lixhe, Belgium) and 15 g of a fine-granular wax blend as specified hereinafter.

This wax blend was prepared in a molten state from the following components in a weight ratio of 70/20/10: a carnauba wax of the firm of Paramelt Syntac, Heerhugowaard, the Netherlands, having a highest melting range of 83-86°C and a saponification number between 30 and 40; K21 wax, likewise of the firm of Paramelt Syntac, viz. a crystalline wax having a melting range of 110-120°C; a gum resin, likewise from the firm of Paramelt Syntac, viz. a stabilized resin with abietic acid groups, having a melting range of about 80°C and a saponification number between 175 and 240.

The wax blend had a melting range according to ASTM D 3954 of 80-90°C, a saponification number according to DGF M-IV-2 of between 40 and 70, a viscosity at 130°C according to ASTM D 3236 of 10-20 mPa.s and satisfied the qualification of biodegradability according to OECD Guideline 301 B.

After all of the above components had been added in the Hobart mixer, vigorous stirring took place for another 2 minutes (position 3), so that a homogeneous suspension was obtained. This suspension could easily be preserved for one hour and even longer without the granular components settling.

The suspension maintained its homogeneous consistency when it was stirred, poured and transported. A portion of the suspension was introduced into a mould of a wafer baking machine and baked there at 200°C for 120 seconds. Then the tray having a wall thickness of about 2.5 mm was taken from the mould. This could be done easily without damaging the tray. The tray had an initial moisture content of less than 4% (later an equilibrium is established at 8-10%), was self-supporting and had a good mechanical strength.

Directly after the tray was removed from the mould, the still hot tray was passed via a conveyor under a spray unit. There a wax blend of the above-described composition was applied to one or to both surfaces of the tray. To that end, the wax blend was melted and misted in a spraying unit via a number of spray nozzles with addition of hot air and this mist was deposited on the tray to form a water-resistant continuous film of a thickness of about 5 µm, which film adhered firmly to the tray. This good adherence was also maintained during storage and during later use of the tray.

The tray was found to be easily able to contain a hot sauce of a temperature of 70°C for at least 10 minutes without losing its firmness.

After use, the tray can be easily composted (the total tray also met the qualification of biodegradability according to OECD Guideline 301 B), forming useful organic degradation substances. Further, only inert filler (clay) is left.

## Claims

1. A biodegradable moulding suitable for containing liquid or more or less solid food or non-food products without loss of the firmness of the moulding, which moulding is composed of a self-supporting base moulding, obtained by baking a suspension based on a starch product, and a water-resistant film, applied to said base moulding, of a biodegradable wax composition comprising at least 50% by weight of wax components and having a melting range beginning at a temperature of at least 40°C, with the film adhering firmly to the base moulding.

2. A biodegradable moulding according to claim 1, wherein the melting range of the biodegradable wax composition begins at a temperature of at least 80°C.

3. A biodegradable moulding according to claim 2, wherein the wax composition contains the following components in the specified amounts:
- 40-70 parts by weight of an amorphous, water-repellent wax type whose melting range is in the range below 90°C,
- 15-35 parts by weight of a crystalline wax type whose melting range is in the range above 95°C, and
- 5-25 parts by weight of a resin.

4. A biodegradable moulding according to claim 3, wherein said components are present in the wax composition in the following amounts:
- 50-65 parts by weight of the amorphous, water-repellent wax type,
- 20-30 parts by weight of the crystalline wax type, and
- 10-20 parts by weight of the resin.

5. A biodegradable moulding according to claim 3 or 4, wherein the resin is an optionally modified natural resin having a saponification number of at least 150 and whose melting range is in the range above 75°C.

6. A biodegradable moulding according to claims 1-5, wherein the film applied to the self-supporting base moulding has a thickness of 2-20 µm.

7. A biodegradable moulding according to claims 1-6, wherein the film is applied only on that side of the self-supporting base moulding which is intended for containing the food or non-food products.

8. A biodegradable moulding according to claims 2-7, wherein the moulding is able to contain liquid or more or less solid ready-to-eat hot food, including hot beverage, of a temperature of 70°C for at least 10 minutes without loss of the firmness of the moulding.

9. A biodegradable moulding according to claims 1-8, wherein the starch product of the base moulding comprises 5-75% by weight of a starch derivative which in comparison with native starch has a reduced swelling capacity at an increased temperature.

10. A biodegradable moulding according to claim 9, wherein the starch derivative of reduced swelling capacity is a cross-linked starch.

11. A biodegradable moulding according to claims 1-10, wherein the starch product of the base moulding is a potato starch product.

12. A biodegradable moulding according to claims 1-11, wherein the base moulding further incorporates a substance which promotes the adherence of the film applied to the base moulding.

13. A biodegradable moulding according to claim 12, wherein the substance which promotes the adherence of the film substantially consists of waxy components and is present in an amount of less than 10% by weight of the weight of the base moulding.

14. A biodegradable moulding according to claim 13, wherein the substance which promotes the adherence of the film is a wax composition as defined in claim 3.

15. A biodegradable moulding according to claims 1-14, wherein the base moulding further incorporates an inert filler and a thickener, in particular xanthan gum, and wherein per 500-1500 parts by weight of total starch product, 25-300 parts by weight of inert filler and 0.5-50 parts by weight of thickener are present.

16. A method for manufacturing a biodegradable moulding suitable for containing liquid or more or less solid food or non-food products without loss of the firmness of the moulding, wherein 500-1500 parts by weight of a starch product comprising 5-75% by weight of a starch derivative which in comparison with native starch has a reduced swelling capacity at an increased temperature, 0.5-50 parts by weight of a thickener, 25-300 parts by weight of an inert filler, and an adherence-promoting substance are prepared with water and mixed to obtain a homogeneous suspension, this suspension is introduced into a baking mould and is baked to obtain a self-supporting base moulding, and at least to the surface of the self-supporting base moulding that is intended for containing the food or non-food products, a firmly adherent water-resistant film is applied of a biodegradable wax composition comprising at least 50% by weight of wax components and having a melting range beginning at a temperature of at least 40°C.

17. A method according to claim 16, wherein the melting range of the biodegradable wax composition begins at a temperature of at least 80°C.

18. A method according to claim 17, wherein the wax composition contains the following components in the specified amounts:
- 40-70 parts by weight of an amorphous, water-repellent wax type whose melting range is in the range below 90°C,
- 15-35 parts by weight of a crystalline wax type whose melting range is in the range above 95°C, and
- 5-25 parts by weight of a resin.

19. A method according to claim 18, wherein the resin is an optionally modified natural resin having a saponification number of at least 150 and whose melting range is in the range above 75°C.

20. A method according to claims 16-19, wherein the wax composition has a saponification number of at least 30.

21. A method according to claims 16-20, wherein the film applied to the self-supporting base moulding has a thickness of 2-20 µm.

22. A method according to claims 16-21, wherein a wax composition as defined in claim 18 is incorporated in the suspension in an amount of less than 10% by weight as a substance for promoting adherence.

23. A method according to claims 16-22, wherein the starch derivative of reduced swelling capacity is a cross-linked starch.

24. A method according to claims 16-23, wherein the starch product which is incorporated into the suspension is a potato starch product.

25. A method according to claims 16-24, wherein xanthan gum is used as thickener in the suspension.

## Patentansprüche

1. Biologisch abbaubares Formteil, das zur Aufnahme von flüssigen oder mehr oder weniger festen Nahrungsmitteln oder anderen Produkten ohne Verlust der Festigkeit des Formteils geeignet ist, welches zusammengesetzt ist aus einem selbsttragenden Basisformteil, das erhältlich ist durch Backen einer auf einem Stärkeprodukt basierenden Suspension und einem auf dem Basisformteil aufgebrachten wasserfesten Film, welches aus einer biologisch abbaubaren Wachszusammensetzung besteht, die mindestens 50 Gew.% Wachsbestandteile enthält und einen bei einer Temperatur von wenigstens 40°C beginnenden Schmelzbereich aufweist, wobei der Film fest an dem Basisformteil haftet.

2. Biologisch abbaubares Formteil nach Anspruch 1, worin der Schmelzbereich der biologisch abbaubaren Wachszusammensetzung bei einer Temperatur von wenigstens 80°C beginnt.

3. Biologisch abbaubares Formteil nach Anspruch 2, worin die Wachszusammensetzung die folgenden Bestandteile in den angegebenen Mengen enthält:
- 40 bis 70 Gewichtsteile eines amorphen, wasserabweisenden Wachses mit einem Schmelzbereich unter 90°C,
- 15 bis 35 Gewichtsteile eines kristallinen Wachses mit einem Schmelzbereich über 95°C und
- 5 bis 25 Gewichtsteile eines Harzes.

4. Biologisch abbaubares Formteil nach Anspruch 3, worin die Bestandteile in folgenden Mengen in der Wachszusammensetzung vorliegen:
- 50 bis 65 Gewichtsteile des amorphen, wasserabweisenden Wachses,
- 20 bis 30 Gewichtsteile des kristallinen Wachses und
- 10 bis 20 Gewichtsteile des Harzes.

5. Biologisch abbaubares Formteil nach Anspruch 3 oder 4, worin das Harz ein gegebenenfalls modifiziertes natürliches Harz mit einer Verseifungszahl von wenigstens 150 und einem über 75°C liegenden Schmelzbereich ist.

6. Biologisch abbaubares Formteil nach Anspruch 1 bis 5, worin der auf das selbsttragende Basisformteil aufgebrachte Film eine Dicke von 2 bis 20 µm aufweist.

7. Biologisch abbaubares Formteil nach Anspruch 1 bis 6, worin der Film nur auf diejenige Seite des selbsttragenden Basisformteils aufgebracht ist, die zur Aufnahme der Nahrungsmittel oder der anderen Produkte bestimmt ist.

8. Biologisch abbaubares Formteil nach Anspruch 2 bis 7, worin das Formteil in der Lage ist, flüssige oder mehr oder weniger feste verzehrfertige heiße Nahrungsmittel, einschließlich heißer Getränke mit einer Temperatur von 70°C wenigstens 10 Minuten lang ohne Verlust der Festigkeit des Formteils aufzunehmen.

9. Biologisch abbaubares Formteil nach Anspruch 1 bis 8, worin das Stärkeprodukt des Basisformteils 5 bis 75 Gew.% eines Stärkederivats enthält, das, verglichen mit natürlicher Stärke, bei erhöhter Temperatur eine verringerte Quellkapazität aufweist.

10. Biologisch abbaubares Formteil nach Anspruch 9, worin das Stärkederivat mit verringerter Quellkapazität eine vernetzte Stärke ist.

11. Biologisch abbaubares Formteil nach Anspruch 1 bis 10, worin das Stärkeprodukt des Basisformteils ein Kartoffelstärkeprodukt ist.

12. Biologisch abbaubares Formteil nach Anspruch 1 bis 11, worin das Basisformteil ferner eine Substanz enthält, die die Haftung des auf dem Basisformteil aufgebrachten Films verstärkt.

13. Biologisch abbaubares Formteil nach Anspruch 12, worin die die Haftung des Films verstärkende Substanz im wesentlichen aus wachsartigen Bestandteilen besteht und in einer Menge von weniger als 10 Gew.%, bezogen auf das Gewicht des Basisformteils, zugegen ist.

14. Biologisch abbaubares Formteil nach Anspruch 13, worin die die Haftung des Films verstärkende Substanz eine wie in Anspruch 3 definierte Wachszusammensetzung ist.

15. Biologisch abbaubares Formteil nach Anspruch 1 bis 14, worin das Basisformteil ferner ein inertes Füllmaterial und ein Verdickungsmittel, insbesondere Xanthan, enthält und worin auf 500 bis 1500 Gewichtsteile des Stärkeprodukts 25 bis 300 Gewichtsteile inertes Füllmaterial und 0,5 bis 50 Gewichtsteile Verdickungsmittel kommen.

16. Verfahren zur Herstellung eines biologisch abbaubaren Formteils, das zur Aufnahme von flüssigen oder mehr oder weniger festen Nahrungsmitteln oder anderen Produkten ohne Verlust der Festigkeit des Formteils geeignet ist, worin 500 bis 1500 Gewichtsteile eines Stärkeprodukts, welches 5 bis 75 Gew.% eines Stärkederivats enthält, das, verglichen mit natürlicher Stärke, bei erhöhter Temperatur eine verminderte Quellkapazität besitzt, 0,5 bis 50 Gewichtsteile eines Verdickungsmittel, 25 bis 300 Gewichtsteile eines inerten Füllmaterials sowie ein Haftmittel mit Wasser zu einer homogenen Suspension angemacht und vermischt werden, die Suspension in eine Backform gegeben und zu einem selbsttragenden Basisformteil gebacken wird und wenigstens auf die zur Aufnahme von Nahrungsmitteln oder anderen Produkten bestimmte Oberfläche des selbsttragenden Basisformteils ein fest haftender, wasserfester Film aus einer biologisch abbaubaren Wachszusammensetzung aufgebracht wird, die wenigstens 50 Gew.% Wachsbestandteile enthält und einen bei einer Temperatur von mindestens 40°C beginnenden Schmelzbereich aufweist.

17. Verfahren nach Anspruch 16, worin der Schmelzbereich der biologisch abbaubaren Wachszusammensetzung bei einer Temperatur von wenigstens 80°C beginnt.

18. Verfahren nach Anspruch 17, worin die Wachszusammensetzung die folgenden Bestandteile in den angegebenen Mengen enthält:
- 40 bis 70 Gewichtsteile eines amorphen, wasserabweisenden Wachses mit einem Schmelzbereich unter 90°C,
- 15 bis 35 Gewichtsteile eines kristallinen Wachses mit einem Schmelzbereich von über 95°C und
- 5 bis 25 Gewichtsteile eines Harzes.

19. Verfahren nach Anspruch 18, worin das Harz ein gegebenenfalls modifiziertes natürliches Harz mit einer Verseifungszahl von wenigstens 150 und einem über 75°C liegenden Schmelzbereich ist.

20. Verfahren nach Anspruch 16 bis 19, worin die Wachszusammensetzung eine Verseifungszahl von mindestens 30 besitzt.

21. Verfahren nach Anspruch 16 bis 20, worin der auf das selbsttragende Basisformteil aufgebrachte Film eine Dicke von 2 bis 20 µm aufweist.

22. Verfahren nach Anspruch 16 bis 21, worin eine wie in Anspruch 18 definierte Wachszusammensetzung als Haftmittel in einer Menge von weniger als 10 Gew.% zu der Suspension gegeben wird.

23. Verfahren nach Anspruch 16 bis 22, worin das Stärkederivat mit verminderter Quellkapazität eine vernetzte Stärke ist.

24. Verfahren nach Anspruch 16 bis 23, worin das in der Suspension enthaltende Stärkeprodukt ein Kartoffelstärkeprodukt ist.

25. Verfahren nach Anspruch 16 bis 24, worin Xanthan als Verdickungsmittel in der Suspension verwendet wird.

## Revendications

1. Un récipient biodégradable approprié pour contenir des aliments liquides, ou semi-solides, ou des produits non alimentaires, sans perte de fermeté du récipient, lequel récipient se compose d'un article moulé de base auto-porteur, obtenu par cuisson d'une suspension à base d'un produit d'amidon et d'un film résistant à l'eau, appliqué sur ledit article moulé de base, d'une composition de cire biodégradable comprenant au moins 50 % en masse de composants de cire et présentant un domaine de fusion commençant à une température d'au moins 40 ° C, le film adhérant fermement à l'article moulé de base.

2. Un récipient biodégradable selon la revendication 1, dans lequel le domaine de fusion de la composition de cire biodégradable commence à une température d'au moins 80 ° C.

3. Un récipient biodégradable selon la revendication 2, dans lequel la composition de cire contient les composants suivants dans les quantités spécifiées :
- 40 à 70 parties en masse d'une cire de type hydrofuge amorphe, dont le domaine de fusion est compris dans le domaine inférieur à 90 ° C,
- 15 à 35 parties en masse d'une cire de type cristallin, dont je domaine de fusion est compris dans le domaine supérieur à 95 ° C, et
- 5 à 25 parties en masse d'une résine.

4. Un récipient biodégradable selon la revendication 3, dans lequel lesdits composants sont présents dans la composition de cire dans les quantités suivantes :
- 50 à 65 parties en masse de la cire de type hydrofuge amorphe,
- 20 à 30 parties en masse de la cire de type cristallin, et
- 10 à 20 parties en masse de la résine.

5. Un récipient biodégradable selon la revendication 3 ou 4, dans lequel la résine est une résine naturelle éventuellement modifiée présentant une valeur de saponification d'au moins 150 et dont le domaine de fusion est compris dans le domaine supérieur à 75 ° C.

6. Un récipient biodégradable selon les revendications 1 à 5, dans lequel le film appliqué sur l'article moulé de base auto-porteur présente une épaisseur comprise entre 2 et 20 µm.

7. Un récipient biodégradable selon les revendications 1 à 6, dans lequel le film n'est appliqué que sur ce côté de l'article moulé de base auto-porteur qui est destiné à contenir les aliments ou les produits non alimentaires.

8. Un récipient biodégradable selon les revendications 2 à 7, dans lequel le récipient est capable de contenir des aliments chauds, prêts à être consommés, liquides ou semi-solides, y compris une boisson chaude, d'une température de 70 ° C pendant au moins 10 minutes sans perte de fermeté du récipient.

9. Un récipient biodégradable selon les revendications 1 à 8, dans lequel le produit d'amidon de l'article moulé de base comprend 5 à 75 % en masse d'un dérivé d'amidon qui, en comparaison avec de l'amidon natif, présente un pouvoir gonflant réduit à une température augmentée.

10. Un récipient biodégradable selon la revendication 9, dans lequel le dérivé d'amidon au pouvoir gonflant réduit est un amidon réticulé.

11. Un récipient biodégradable selon les revendications 1 à 10, dans lequel le produit d'amidon de l'article moulé de base est un produit d'amidon de pomme de terre.

12. Un récipient biodégradable selon les revendications 1 à 11, dans lequel l'article moulé de base comprend en outre une substance qui favorise l'adhérence du film appliqué sur l'article moulé de base.

13. Un récipient biodégradable selon la revendication 12, dans lequel la substance qui favorise l'adhérence du film se compose substantiellement de composants cireux et est présente dans une quantité inférieure à 10 % en masse de la masse de l'article moulé de base.

14. Un récipient biodégradable selon la revendication 13, dans lequel la substance qui favorise l'adhérence du film est une composition de cire telle que définie à la revendication 3.

15. Un récipient biodégradable selon les revendications 1 à 14, dans lequel l'article moulé de base comprend en outre une matière de charge inerte et un épaississant, en particulier de la gomme de xanthane, et dans lequel pour 500 à 1 500 parties en masse de produit d'amidon total, 25 à 300 parties en masse de matière de charge inerte et 0,5 à 50 partie(s) en masse d'épaississant sont présentes.

16. Un procédé de fabrication d'un récipient biodégradable approprié pour contenir des aliments liquides, ou semi-solides, ou des produits non alimentaires, sans perte de fermeté du récipient, dans lequel 500 à 1 500 parties en masse d'un produit d'amidon comprenant 5 à 75 % en masse d'un dérivé d'amidon qui, en comparaison avec de l'amidon natif, présente un pouvoir gonflant réduit à une température augmentée, 0,5 à 50 partie(s) en masse d'un épaississant, 25 à 300 parties en masse d'une matière de charge inerte et une substance favorisant l'adhérence sont préparées avec de l'eau et mélangées pour obtenir une suspension homogène, cette suspension étant introduite dans un moule de cuisson et cuite pour obtenir un article moulé de base auto-porteur et, au moins sur la surface de l'article moulé de base auto-porteur qui est destinée à contenir les aliments ou les produits non alimentaires, un film résistant à l'eau adhérant fortement étant appliqué, d'une composition de cire biodégradable comprenant au moins 50 % en masse de composants de cire et présentant un domaine de fusion commençant à une température d'au moins 40 ° C.

17. Un procédé selon la revendication 16, dans lequel le domaine de fusion de la composition de cire biodégradable commence à une température d'au moins 80 ° C.

18. Un procédé selon la revendication 17, dans lequel la composition de cire contient les composants suivants dans les quantités spécifiées :
- 40 à 70 parties en masse d'une cire de type hydrofuge amorphe, dont le domaine de fusion est compris dans le domaine inférieur à 90 ° C,
- 15 à 35 parties en masse d'une cire de type cristallin, dont le domaine de fusion est compris dans le domaine supérieur à 95 ° C, et
- 5 à 25 parties en masse d'une résine.

19. Un procédé selon la revendication 18, dans lequel la résine est une résine naturelle éventuellement modifiée présentant une valeur de saponification d'au moins 150 et dont le domaine de fusion est compris dans le domaine supérieur à 75 ° C.

20. Un procédé selon la revendication 16 à 19, dans lequel la composition de cire présente une valeur de saponification d'au moins 30.

21. Un procédé selon les revendications 16 à 20, dans lequel le film appliqué sur l'article moulé de base auto-porteur présente une épaisseur comprise entre 2 et 20 µm.

22. Un procédé selon les revendications 16 à 21, dans lequel une composition de cire telle que définie à la revendication 18 est incorporée à la suspension dans une quantité inférieure à 10 % en masse, en tant que substance destinée à favoriser l'adhérence.

23. Un procédé selon les revendications 16 à 22, dans lequel le dérivé d'amidon de pouvoir gonflant réduit est un amidon réticulé.

24. Un procédé selon les revendications 16 à 23, dans lequel le produit d'amidon qui est incorporé à la suspension est un produit d'amidon de pomme de terre.

25. Un procédé selon les revendications 16 à 24, dans lequel de la gomme de xanthane est utilisée en tant qu'épaississant dans la suspension.
